Europäisches Patentamt

(19) European Patent Office

Office européen des brevets

(11) EP 1 138 825 A1

(12) **EUROPEAN PATENT APPLICATION**

(43) Date of publication:
04.10.2001 Bulletin 2001/40

(51) Int Cl.7: **D21H 19/38**, D21H 19/42,
D21H 19/70

(21) Application number: 01302462.5

(22) Date of filing: 16.03.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **30.03.2000 US 193305 P
31.01.2001 US 774064**

(71) Applicant: **ROHM AND HAAS COMPANY
Philadelphia, Pennsylvania 19106-2399 (US)**

(72) Inventors:
• **Bobsein, Barrett Richard
Sellersville, Pennsylvania 18960 (US)**

• **Finch, William Christopher
Blue Bell, Pennsylvania 19422 (US)**
• **Gleeson, David Albert
Lansdale, Pennsylvania 19446 (US)**

(74) Representative: **Kent, Venetia Katherine
Rohm and Haas (UK) Ltd
European Operations Patent Dept.
Lennig House
2 Mason's Avenue
Croydon, CR9 3NB (GB)**

(54) **Waterborne paper or paperboard coating composition**

(57) A waterborne pigmented paper or paperboard coating composition containing as pigment 50% to 100%, by weight based on pigment weight, calcium carbonate and from 1% to 25%, as dry weight based on pigment weight, of an aqueous polymeric dispersion including

(a) 95-25% by weight, based on the weight of the solids of the aqueous polymeric dispersion, of a first emulsion polymer having an average particle diameter of 150 to 3000 nanometers and
(b) 5-75% by weight, based on the weight of the solids of the aqueous polymeric dispersion, of a second emulsion polymer having an average particle diameter of 40 to 600 nanometers

wherein the ratio of the average particle diameter of the first emulsion polymer to the average particle diameter of the second emulsion polymer is from 1.2 to 60, wherein at least the first emulsion polymer particles, when dry, contain at least one void, and wherein the first emulsion polymer is prepared in the presence of the second emulsion polymer or the second emulsion polymer is prepared in the presence of the first emulsion polymer is provided, as is a method for improving the sheet gloss of paper or paperboard coated with the coating composition..

**Description**

This invention relates to a waterborne pigmented paper or paperboard coating composition. More specifically, this invention relates to a waterborne pigmented paper or paperboard coating composition, the pigment including at least 50 %, by weight of the pigment, calcium carbonate and from 1% to 25%, as dry weight by weight of the pigment, of an aqueous polymeric dispersion including at least two emulsion polymers of differing particle diameter, at least one of which emulsion polymers contains at least one void. Also, this invention relates to a method for improving the sheet gloss of paper of paperboard by forming, applying, drying, and, optionally, subsequently calendering the waterborne coating composition of this invention.

Coated paper and paperboard is usually printed and the coating must exhibit a useful level of smoothness and opacity as well as desired levels of gloss and brightness and sufficient strength to withstand the printing operation. Coating opacity and strength are primarily effected by the selection of and amounts of polymeric binder and pigments to be used in the coating with some contribution from the coating application, drying, and finishing methods used. Waterborne pigmented paper or paperboard coatings containing as pigment 50% to 100% by weight calcium carbonate have been found to exhibit desirable coatings properties.

U.S. Patent No. 4,567,099 discloses bimodal latexes having two separate and distinct particle size distributions. The latexes are employed in coating paper in conjunction with a mineral filler. The larger size particles contain both relatively harder cores and relatively softer shell domains. The smaller size particles are either separately formed and subsequently blended together or prepared by adding a seed latex simultaneously to or after the shell domain of the large size particle is formed. However, void-containing particles and higher levels of solids and sheet gloss than can be achieved with these coatings is desirable.

JP 5-170802 discloses emulsion particles including a group of hollow particles in which voids are present inside the particles during drying and additionally a group of smaller particles for use in paper coatings. Also disclosed is that the emulsion system obtained by adding small particles to a hollow-particle emulsion having uniform particle diameters provides no reduction in gloss.

The problem faced by the inventors is the provision of waterborne pigmented paper or paperboard coating compositions containing as pigment 50% to 100% by weight calcium carbonate having improved coating gloss . We have now found that the waterborne coating composition of this invention including a bimodal particle size emulsion polymer with at least one of the particle populations containing voids provides unexpectedly higher sheet gloss in certain calcium carbonate-containing compositions, as well as higher coating solids at practical viscosity and lowered drying energy requirements.

STATEMENT OF THE INVENTION

According to a first aspect of the present invention there is provided a waterborne pigmented paper or paperboard coating composition including pigment including at least 50 %, by weight of the pigment, calcium carbonate and from 1% to 25%, as dry weight by weight of the pigment, of an aqueous polymeric dispersion including

> (a) 95-25% by weight, based on the weight of the solids of the aqueous polymeric dispersion, of a first emulsion polymer having an average particle diameter of 150 to 3000 nanometers and
> (b) 5-75% by weight, based on the weight of the solids of the aqueous polymeric dispersion, of a second emulsion polymer having an average particle diameter of 40 to 600 nanometers

wherein the ratio of the average particle diameter of the first emulsion polymer to the average particle diameter of the second emulsion polymer is from 1.2 to 60,
wherein at least the first emulsion polymer particles, when dry, contain at least one void, and wherein the first emulsion polymer is prepared in the presence of the second emulsion polymer or the second emulsion polymer is prepared in the presence of the first emulsion polymer.

According to a second aspect of the present invention there is provided a method for improving the sheet gloss of coated paper or paperboard by forming a waterborne pigmented paper or paperboard coating composition including pigment including at least 50 %, by weight of the pigment, calcium carbonate and from 1% to 25%, as dry weight by weight of the pigment, of an aqueous polymeric dispersion including

> (a) 95-25% by weight, based on the weight of the solids of the aqueous polymeric dispersion, of a first emulsion polymer having an average particle diameter of 150 to 3000 nanometers and
> (b) 5-75% by weight, based on the weight of the solids of the aqueous polymeric dispersion, of a second emulsion polymer having an average particle diameter of 40 to 600 nanometers

wherein the ratio of the average particle diameter of the first emulsion polymer to the average particle diameter of the second emulsion polymer is from 1.2 to 60,

wherein at least the first emulsion polymer particles, when dry, contain at least one void, and wherein the first emulsion polymer is prepared in the presence of the second emulsion polymer or the second emulsion polymer is prepared in the presence of the first emulsion polymer; applying the coating to paper or paperboard; drying the applied coating at a temperature of 50 C to 100 C; and optionally, calendering the coated paper or paperboard.

DETAILED DESCRIPTION

The waterborne pigmented paper or paperboard coating composition of this invention contains pigment(s) including 50% to 100%, by weight of the pigment, of calcium carbonate, preferably 70% to 100%, by weight of the pigment, of calcium carbonate . Other inorganic or organic pigments may be included such as, for example, clay such as, for example, delaminated clay and calcined clay, titanium dioxide, talc, solid organic colored pigments and solid polystyrene particles.

The waterborne pigmented paper or paperboard coating composition of this invention, contains from 1% to 25%, as dry weight based on the weight of the pigment, of an aqueous polymeric dispersion which contains 95-25% by weight, based on the weight of the solids of the aqueous polymeric dispersion, of a first emulsion polymer having an average particle diameter of 150 to 3000 nanometers and 5-75% by weight, based on the weight of the solids of the aqueous polymeric dispersion, of a second emulsion polymer having an average particle diameter of 40 to 600 nanometers wherein the ratio of the average particle diameter of the first emulsion polymer to the average particle diameter of the second emulsion polymer is from 1.2 to 60,

wherein at least the first emulsion polymer particles, when dry, contain at least one void, and wherein the first emulsion polymer is prepared in the presence of the second emulsion polymer or the second emulsion polymer is prepared in the presence of the first emulsion polymer.

The aqueous polymeric dispersion of this invention is prepared by a sequential emulsion polymerization. In a preferred process relatively larger multistaged first polymer particles which, when dry, contain a void are formed first by emulsion polymerization, followed by the formation, in the presence of the first-formed particles, of relatively smaller second polymer particles which, when dry, may or may not contain a void. The multistaged first polymer particles include at least one hydrophilic core and at least one hydrophobic shell. The hydrophilic core polymer of the first polymer particles of the first aspect of this invention is the product of emulsion polymerizing from 5% by weight to 100% by weight, based on the total weight of the core polymer, of a hydrophilic monoethylenically unsaturated monomer and from 0% by weight to 95% by weight, based on the total weight of the core polymer, of at least one nonionic monoethylenically unsaturated monomer.

Hydrophilic core polymers containing at least 5% by weight, based on the total weight of the core polymer, of at least one hydrophilic monoethylenically unsaturated monomer have practical swellability for the purposes of the present invention. There may be instances wherein, because of the hydrophobicity of certain comonomers or combinations thereof in conjunction with the hydrophobic/hydrophilic balance of a particular acid monomer, the copolymer may require less than 5% by weight, based on the total weight of the core polymer. Preferably, the level of hydrophilic monomer is from 5% to 100% by weight, based on the total weight of the core polymer; more preferably, from 20% to 60% by weight; and most preferably, from 25% to 50% by weight. The hydrophilic core polymer may be made in a single stage or step of the sequential polymerization or may be made by a plurality of steps in sequence.

The hydrophilic core polymer includes at least one hydrophilic monoethylenically unsaturated monomer which is polymerized alone or with at least one nonionic monoethylenically unsaturated monomer. Included in the term "hydrophilic monoethylenically unsaturated monomer" is a nonpolymeric compound containing at least one carboxylic acid group which absorbed into the core polymer before, during or after the polymerization of the hydrophobic shell polymer as a replacement for the hydrophilic monoethylenically unsaturated monomer in the hydrophilic core polymer, as described in U.S. Patent 4,880,842. In addition, this invention contemplates, and includes in the term "hydrophilic monoethylenically unsaturated monomer," the use of a latent hydrophilic monomer in which case the core contains 0% to less than 5%, based on the total weight of the core polymer, hydrophilic monoethylenically unsaturated monomer but which is swellable, during or after hydrolysis of the core polymer as described in U.S. Patents No. 5,041,464; 5,157,084; and 5,216,044, or other chemical conversion, to the hydrophilic core polymer of this invention.

Suitable hydrophilic monoethylenically unsaturated monomers useful for making the core polymer include monoethylenically unsaturated monomers containing acid-functionality such as monomers containing at least one carboxylic acid group including (meth)acrylic acid [by "(meth)acrylic" herein is meant acrylic or methacrylic], (meth)acryloxypropionic acid, itaconic acid, aconitic acid, maleic acid, fumaric acid, crotonic acid, monomethyl maleate, monomethyl fumarate, monomethyl itaconate and the like. Acid precursors such as anhydrides, for example maleic anhydride, are included. Acrylic acid and methacrylic acid are preferred.

Suitable nonpolymeric compounds containing at least one carboxylic acid group include $C_6$-$C_{12}$ aliphatic or

aromatic monocarboxylic acids and dicarboxylic acids, such as benzoic acid, m-toluic acid, p-chlorobenzoic acid, o-acetoxybenzoic acid, azelaic acid, sebacic acid, octanoic acid, cyclohexanecarboxylic acid, lauric acid and monobutyl phthalate and the like.

Suitable nonionic monoethylenically unsaturated monomers for making the hydrophilic core polymer include styrene, $\alpha$-methyl styrene, vinyltoluene, ethylene, vinyl acetate, vinyl chloride, vinylidene chloride, acrylonitrile, (meth)acrylamide, ($C_1$-$C_{20}$) alkyl or ($C_3$-$C_{20}$) alkenyl esters of (meth)acrylic acid, such as methyl (meth)acrylate, ethyl (meth)acrylate, butyl (meth)acrylate, 2-ethylhexyl (meth)acrylate, benzyl (meth)acrylate, lauryl (meth)acrylate, oleyl (meth)acrylate, palmityl (meth)acrylate, stearyl (meth)acrylate and the like.

The hydrophilic core polymer, whether obtained by a single stage process or a process involving several stages, has an average size of 40 to 2000 nanometers, preferably 100 to 1000 nanometers, more preferably 150 to 700 nanometers, diameter in unswollen condition. If the core is obtained from a seed polymer, the seed polymer may have an average particle size of 30 nm to 200 nm.

The hydrophilic core polymer may also optionally contain from 0 to 60%, preferably from 0 to 20%, more preferably 0.1% to 3% by weight, based on the total weight of the core polymer of copolymerized polyethylenically unsaturated monomer, wherein the amount used is generally proportional to the amount of hydrophilic monoethylenically unsaturated monomer used. Suitable polyethylenically unsaturated monomers include alkylene glycol diacrylates and dimethacrylates, such as for example, ethylene glycol diacrylate, ethylene glycol dimethacrylate, 1,3-butylene glycol diacrylate, 1,4-butylene glycol diacrylate propylene glycol diacrylate and triethylene glycol dimethylacrylate; 1,3-glycerol dimethacrylate; 1,1,1-trimethylol propane dimethacrylate; 1,1,1-trimethylol ethane diacrylate; pentaerythritol trimethacrylate; 1,2,6-hexane triacrylate; sorbitol pentamethacrylate; methylene bis-acrylamide, methylene bismethacrylamide, divinyl benzene, vinyl methacrylate, vinyl crotonate, vinyl acrylate, vinyl acetylene, trivinyl benzene, triallyl cyanurate, divinyl acetylene, divinyl ethane, divinyl sulfide, divinyl ether, divinyl sulfone, diallyl cyanamide, ethylene glycol divinyl ether, diallyl phthalate, divinyl dimethyl silane, glycerol trivinyl ether, divinyl adipate; dicyclopentenyl (meth)acrylates; dicyclopentenyloxy (meth)acrylates; unsaturated esters of glycol monodicyclopentenyl ethers; allyl esters of $\alpha,\beta$-unsaturated mono- and dicarboxylic acids having terminal ethylenic unsaturation including allyl methacrylate, allyl acrylate, diallyl maleate, diallyl fumarate, diallyl itaconate, butadiene, and the like.

After the hydrophilic core polymer has been formed a tiecoat may be formed on the hydrophilic core. The tiecoat (referred to in some prior patents as "the first stage of sheath formation") may be an acrylic polymer which compatibilizes the hydrophilic core polymer with the one or more hydrophobic shell polymers, particularly for a hydrophilic core polymer having a particle size diameter of less than 280 nanometers (nm). The tiecoat may include copolymerized hydrophilic monomers such as carboxylic acid-containing monomers such as, for example 1-8%, by weight based on tiecoat weight, methacrylic acid or, alternatively, higher levels of less hydrophilic monomers such as 10-50%, by weight based on tiecoat weight, methyl methacrylate. Increasing the level of hydrophilicity of the tiecoat is believed to improve swelling of the core polymer when hard base is used in void formation. In the alternative, a tiecoat-free process as taught in US Patent No. 5,494,971 may be employed.

The shell polymer is formed from 90% by weight to 99.9% by weight, based on the total weight of shell polymer, of at least one nonionic monoethylenically unsaturated monomer and from 0.1% by weight to 10% by weight, based on the total weight of the shell polymer, of an acid-functional monoethylenically unsaturated monomer.

Suitable nonionic monoethylenically unsaturated monomers for making the hydrophobic shell polymer include styrene, $\alpha$-methyl styrene, vinyltoluene, ethylene, vinyl acetate, vinyl chloride, vinylidene chloride, acrylonitrile, (meth)acrylamide, ($C_1$-$C_{20}$) alkyl or (C3-C20) alkenyl esters of (meth)acrylic acid, such as methyl (meth)acrylate, ethyl (meth)acrylate, butyl (meth)acrylate, 2-ethylhexyl (meth)acrylate, benzyl (meth)acrylate, lauryl (meth)acrylate, oleyl (meth)acrylate, palmityl (meth)acrylate, stearyl (meth)acrylate and the like. Styrene is preferred for the shell polymer.

Suitable monoethylenically unsaturated monomers containing acid-functionality for making the hydrophobic polymer shell include acrylic acid, methacrylic acid, (meth)acryloxypropionic acid, itaconic acid, aconitic acid, maleic acid, fumaric acid, crotonic acid, monomethyl maleate, monomethyl fumarate, monomethyl itaconate and the like. Acid precursors such as anhydrides, for example maleic anhydride are included. Acrylic acid and methacrylic acid are preferred.

The shell polymer may fully encapsulate the polymer or may incompletely encapsulate the core polymer according to the teachings of US Patent No. 5,409,776. Preferably, the shell polymer fully encapsulates the core polymer. The ratio of the weight of the core polymer to the weight of the shell polymer is from 1:2 to 1:100. The shell polymer has a glass transition temperature ("Tg") greater than 50 °C. Preferred is a Tg of a first shell polymer of greater than 90 °C. Optionally, there may be additional shell polymer fully or incompletely encapsulating the first shell polymer or tiecoats formed after the first shell polymer has been formed.

Glass transition temperatures (Tgs) herein are those calculated by the Fox Equation, that is, for calculating the Tg of a copolymer of monomers M1 and M2,

$$1/Tg(calc.)= w(M1) / Tg(M1) + w(M2) / Tg(M2),$$

wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2
All temperatures used in this calculation are expressed in °K.

The glass transition temperature of homopolymers may be found, for example, in "Polymer Handbook", edited by J. Brandrup and E.H. Immergut, Interscience Publishers.

As used herein, the term "multistaged" or "sequentially" emulsion polymerized" refers to polymers (including homopolymers and copolymers) which are prepared in aqueous medium by an emulsion polymerization process wherein the dispersed polymer particles of a preformed latex or "seed" polymer in the aqueous medium are increased in size by deposition thereon of polymerized product of one or more successive monomer charges introduced into the medium containing dispersed particles of the preformed latex in one or more subsequent stages.

The term "seed" polymer is used herein to refer to an aqueous emulsion polymer dispersion which may be the initially-formed dispersion, that is, the product of a single stage of emulsion polymerization or it may be the emulsion polymer dispersion obtained at the end of any subsequent stage except the final stage of the sequential polymerization. Thus, the hydrophilic core polymer of this invention which is intended to be encapsulated with a shell may itself be termed a seed polymer for the next stage wherein the shell-forming polymer is deposited on such seed polymer particles.

The hydrophobic shell polymer may be made in a single stage or step of the sequential polymerization or may be made by a plurality of steps in sequence following the polymerization of hydrophilic core polymer with or without the need for a tiecoat layer. The first stage of emulsion polymerization in the process of the present invention may be the preparation of a seed polymer containing small dispersed polymer particles insoluble in the aqueous emulsion polymerization medium. This seed polymer may or may not contain any hydrophilic monomer component but provides particles of minute size which form the nuclei on which the hydrophilic core polymer, with or without nonionic comonomer, is formed.

A water-soluble free radical initiator is utilized in the aqueous emulsion polymerization. Suitable water-soluble free radical initiators include hydrogen peroxide; tert-butyl peroxide; alkali metal such as sodium, potassium and lithium persulfate; ammonium persulfate; and mixture of such an initiator with a reducing agent, such as a sulfite, including an alkali metal metabisulfite, hydrosulfite, and hyposulfite; sodium formaldehyde sulfoxylate; and a reducing sugar, to form a redox system. The amount of initiator may be from 0.01% by weight to 2% by weight of the monomer charged and in a redox system, a corresponding range of 0.01% by weight to 2% by weight of reducing agent may be used. The temperature may be in the range of 10°C to 100°C. In the case of the persulfate systems, the temperature is preferably in the range of 60°C to 95°C. In the redox system, the temperature is preferably in the range of 30°C to 85°C, more preferably 30 °C to 60°C. As a general rule during the formation of the core polymer, the amount of emulsifier should be kept below that corresponding to the critical micelle concentration for a particular monomer system, but while this limitation is preferable and produces a unimodal product, it has been found that in some systems the critical micelle concentration of the emulsifier may be exceeded somewhat without the formation of an objectionable or excessive number of dispersed micelles or particles.

Any nonionic or anionic emulsifier may be used, either alone or together. Examples of suitable nonionic type of emulsifier include tert-octylphenoxyethylpoly(39)-ethoxyethanol, polyethylene glycol 2000 monooleate, ethoxylated castor oil, block copolymers of propylene oxide and ethylene oxide, polyoxyethylene(20) sorbitan monolaurate. and nonylphenoxyethylpoly(40)ethoxyethanol. Examples of suitable anionic emulsifiers include sodium lauryl sulfate, sodium dodecylbenzenesulfonate, sodium lauryl ether sulfate, sodium alpha-olefin (C14-C16) sulfonate, ammonium or alkali metal salts of sulfosuccinate derivatives, ammonium or alkali metal salts of fatty acids such as stearic acid, linseed oil fatty acid, and coconut oil fatty acid, ammonium or alkali metal salts of phosphate esters of ethoxylated nonylphenol and tert-octylphenoxyethoxypoly(39)ethoxyethyl sulfate, sodium salt. The viscosity-average molecular weight of the polymer formed in a given stage may range from 100,000, or lower if a chain transfer agent is used, to several million molecular weight. If 0.1% to 20% by weight, based on the weight of the monomer, of a polyethylenically unsaturated monomer mentioned hereinbefore is used in making the hydrophilic core polymer, the molecular weight is increased whether or not crosslinking occurs. The use of the polyethylenically unsaturated monomer reduces the tendency of the core polymer to dissolve when the multistaged polymer is treated with a swellant for the core. If it is desired to produce a hydrophilic core polymer having a molecular weight in the lower part of the range, such as from 500,000 down to as low as 20,000, it is frequently most practical to do so by avoiding the polyethylenically unsaturated monomers and using a chain transfer agent instead, such as 0.05% to 2% or more thereof, examples being alkyl mercaptans, such as sec-butyl mercaptan.

The polymerization of the shell polymer may be performed in the same reaction vessel in which the formation of the hydrophilic core polymer was accomplished or the hydrophilic core polymer may be transferred to another reaction container. The amount of polymer deposited to form shell polymer(s) is generally such as to provide an overall diameter of the first emulsion polymer particle of 100 to 2500 nanometers, preferably of 200 to 1500 nanometers, in unswollen condition (that is, before any neutralization to raise the pH to 6 or higher).

In one embodiment the second emulsion polymer is formed in the presence of the first emulsion polymer; it may be formed in the same reaction vessel as the first emulsion polymer or in a different place or time or under different conditions from those used in the formation of the first emulsion polymer. In any event after 0-100% by weight of the monomer of the first emulsion polymer shell has been added, the second emulsion polymer formation is initiated by introducing either an amount of surfactant sufficient to form new micelles and, thereby, new particles or, alternatively, by introducing a emulsion polymerized seed latex having a particle diameter less than 200 nanometers. Preferred is introducing a emulsion polymerized seed latex having a particle diameter less than 200 nanometers. Then the remainder of first emulsion polymer shell monomer mixture and from 0 to 94% by weight based on the weight of the solids of the aqueous polymeric dispersion of at least one ethylenically unsaturated monomer are added. The monomer(s) may be selected from the nonionic and carboxylic acid monomers listed herein as appropriate for forming the first emulsion polymer shell with the proviso that the overall composition of the remainder of first emulsion polymer shell monomer mixture and from 0 to 94% by weight based on the weight of the solids of the aqueous polymeric dispersion of at least one ethylenically unsaturated monomer is such that the requirements for the composition of the first polymer shell are met since the polymerization at this stage is cumulative to the shell polymer of the first emulsion polymer as well as to the newly formed or introduced particles. The monomer may be added as neat monomer or as a monomer emulsion, in one shot, multiple additions, in a continuous addition or combination thereof. Preferred is the addition as a monomer emulsion in a uniform continuous addition. The polymerization is effected using the surfactant, initiators, and techniques disclosed herein for the formation of the first emulsion polymer shell. Polymerization of at least 99% of all added monomer by weight based on the weight of the solids of the aqueous polymeric dispersion is effected.

In an alternative embodiment, the emulsion polymerized seed latex having a particle diameter less than 200 nanometers which may be used to initiate the formation of the second emulsion polymer has a composition meeting the requirements of a hydrophilic core polymer of the first emulsion polymer and the overall composition of the remainder of first emulsion polymer shell monomer mixture and from 0 to 94% by weight based on the weight of the solids of the aqueous polymeric dispersion of at least one ethylenically unsaturated monomer meets the requirements for the composition of the first polymer shell in which case the second emulsion polymer will form particles which, on drying, contain a void, but having a different particle size from the first emulsion polymer.

First emulsion polymer particles and, optionally, second emulsion polymer particles containing a void are formed by adding to the hydrophilic core polymer, when fully encapsulated with a hydrophobic shell polymer, a suitable swelling agent to which the hydrophobic shell polymer is permeable.

In a preferred embodiment, voided polymer particles may be formed by swelling the core polymer with a suitable conjugate base and a solvent, when necessary, which permeates through the shell polymers and then drying the swollen multistaged polymer particles.

The monomers used and the relative proportions thereof in any hydrophobic shell polymer formed should be such that it is permeable to an aqueous or gaseous volatile or fixed basic swellant for the hydrophilic core polymer. Monomeric mixtures for making the hydrophobic shell polymers contain from 0.1% by weight to 10% by weight, based on the total weight of the shell polymer, of an acid-functional monoethylenically unsaturated monomer. However, the proportion of acid-functional monoethylenically unsaturated monomer in any shell polymer should not exceed one-third the proportion thereof in the core polymer.

The hydrophilic core polymer of the multistage polymer particle is swollen when the polymer particles are subjected to a basic swelling agent that permeates the shell to at least partially neutralize (to a pH of at least 6 to 10) the hydrophilic-functionality of the hydrophilic core polymer and thereby to cause swelling by hydration of the hydrophilic core polymer. The expansion may involve partial merging of the outer periphery of the core into any pores of the inner periphery of the shell and also partial enlargement or bulging of the shell and the entire particle overall. When the swelling agent is removed by drying, the shrinkage of the core tends to develop a void, the extent of which depends upon the resistance of the shell to restoration to its previous size. By "void" herein is mean a polymer-free space, typically filled with water in the aqueous dispersion and with air in the dried hollow sphere pigment.

In a preferred embodiment unreacted monomer is provided to the multistage emulsion polymer particle along with the basic swelling agent under conditions such that substantially no polymerization is occurring. There are many means for providing that no substantial polymerization of monomer is occurring including the addition of one or more polymerization inhibitors, the addition of one or more reducing agents, waiting for a sufficient period of time until there is substantially no radical flux, cooling the contents of the reactor to limit the reactivity of the free radicals, and combinations thereof. A preferred means involves the addition of one or more polymerization inhibitors such as, for example, N,N-diethylhydroxylamine, N-nitrosodiphenylamine, 2,4-dinitrophenylhydrazine, p-phenylenediamine, phenathiazine, alloocimene, triethyl phosphite, 4-nitrosophenol, 2-nitrophenol, p-aminophenol, 4-hydroxy-2,2,6,6-tetramethylpiperidinyloxy free radical, hydroquinone, p-methoxyhydroquinone, t-butyl-p-hydroquinone, 2,5-di-t-butyl-p-hydroquinone, 1,4-napththalenediol, 4-t-butyl catechol, copper sulfate, coppoer nitrate, cresol, and phenol. When used, the polymerization inhibitors are used in an amount effective to substantially stop polymerization, generally from 25 to 5,000 parts per million, preferably from 50 to 3500 parts per million based on polymer solids.

Suitable swelling agents for hydrophilic core polymer include volatile bases such as ammonia, ammonium hydroxide, and volatile lower aliphatic amines, such as morpholine, trimethylamine, and triethylamine, and the like; fixed or permanent bases such as potassium hydroxide, lithium hydroxide, zinc ammonium complex, copper ammonium complex, silver ammonium complex, strontium hydroxide, barium hydroxide and the like. Solvents, such as, for example, ethanol, hexanol, octanol, Texanol® solvent and those described in U.S. Patent 4,594,363, may be added to aid in fixed or permanent base penetration.

When the hydrophilic core polymer is fully encapsulated, it does not titrate with alkali metal bases under normal analytical conditions of 1 hour and at room temperature. To demonstrate full encapsulation samples may be removed during the course of the shell polymerization and titrated with sodium hydroxide.

In an alternative embodiment the hydrophilic core polymer may be swollen to an extent that the fully encapsulating shell is ruptured which provides a particle with at least one pore communicating between the surface of the particle and the interior, i.e., core or void, of the particle, according to the teachings of US Patent No. 5,527,613. In another alternative embodiment a particle formed according to the teachings of US Patent No. 5,409,776 may include a hydrophilic core polymer substantially but incompletely encapsulated by a shell polymer. In that case, the polymer may be swollen to provide a particle with at least one pore communicating between the surface of the particle and the interior, i.e., core or void, of the particle.

In an alternative embodiment multiple voids are formed within a particle fully or partially enclosed by a shell polymer; by multiple voids herein is meant two or more voids, whether isolated or connected to other voids, whether substantially spherical in shape or not, including, for example, void channels, interpenetrating networks of void and polymer, and sponge-like structures.

The waterborne paper or paperboard coating composition of this invention typically contains, in addition to calcium carbonate, optional other pigment(s) and the aqueous polymeric dispersion, binder(s), water, and coatings adjuvants, as are well known in the art.

The binder may be a natural or synthetic polymer in the form of a solution or dispersion in water such as, for example, starch, hydroxyethylated starch, protein, polyvinyl acetate, poly(styrene/acrylate) and poly(styrene/butadiene). Binders, when used, are typically used at a total level of 3 -20% by dry weight based on the weight of dry pigment.

Coatings adjuvants used in paper or paperboard coatings may optionally include crosslinking agents, lubricants, thickeners, rheology modifiers, buffers, biocides, pigment dispersants, surfactants, and waxes.

The waterborne coating composition is prepared by techniques which are well known in the paper and paperboard coatings art. The pigment(s) is well-dispersed in a waterborne medium under high shear such as is afforded by a COWLES® mixer. Then the aqueous polymeric dispersion and binder(s) are added under low shear stirring along with other coatings adjuvants, as desired. The solids content of the waterborne pigmented coating may be from 40% to 70% by weight. The viscosity of the waterborne pigmented coating composition may be from 1000 mPs to 5000 mPs, as measured using a Brookfield viscometer (Model LVT using spindle No.3 at 12 rpm); the viscosities appropriate for different application methods vary considerably.

Coated paper or paperboard is paper or paperboard which has a waterborne coating, typically pigmented, applied to one or both sides. The uncoated paper or paperboard substrate typically has a basis weight of 20-350 g/m.$^2$ and the coating is typically applied in an amount of 4-30 g./m.$^2$, per side, using conventional coatings methods such as, for example, a trailing blade coater, a size press, and an air knife coater.

In the second aspect of this invention a method for improving the sheet gloss of paper and paperboard is provided including forming the waterborne pigmented paper or paperboard composition of this invention, applying the coating to paper or paperboard; drying the applied coating at a temperature of 50 °C to 100 °C; and, optionally, calendering the coated paper or paperboard at a temperature between 60 °C and 120 °C and nip lineal loads between 50 and 450 kNewtons/m.

**Experimental Methods**

Measurement of Particle Size . A commercial instrument, the CHDF 2000, available from Matec Applied Sciences was used. The CHDF 2000 was equipped with the medium sized capillary from Matec Applied Sciences and a 220 nm UV light detector. Sodium benzoate was used as a reference marker. Carrier fluid was prepared by 1:10 dilution of GR-500(2X) concentrate, obtained from Matec Applied Sciences, with deionized water. The CHDF 2000 was used with the medium sized capillary maintained at 35 °C and the carrier fluid flow rate at 1.4 mL/min. The instrument was calibrated for particle size using commercially available, NIST traceable particle size standard, monodisperse polystyrene latices. For CHDF analysis latex samples were diluted to 0.25 to 0.5 wt% with carrier fluid before injection into the capillary.

Based on the particle size calibration the raw fractogram data was converted into a plot of particle % (by weight) vs particle size; the particle size of the particle modes present was determined from the peaks in the particle % vs particle size plot, and the relative amounts of the two modes was determined by the relative peak integrals.

Centrifuge Test Method A portion of polymer dispersion was diluted to 18% total solids and 35 grams of the diluted dispersion were centrifuged in 50 ml centrifuge tubes under conditions that produced a clear supernatant which was decanted and weighed. Centrifuging samples at 24000 rpm for 75 minutes in a Sorval™ SA-300A rotor was typically sufficient. Extrapolating from the supernatant data of solid particles as disclosed in EP 915108 A supernatant weights less than 24.8 grams indicate the presence of hollow particles.

Abbreviations used herein include: MMA = methyl methacrylate; AA = acrylic acid; MAA = methacrylic acid; BA = butyl acrylate; Sty = styrene; DI water = deionized water.

EXAMPLE 1. Preparation of Aqueous Polymer Dispersion.

A 5-liter round-bottom flask equipped with a paddle stirrer, thermocouple, nitrogen inlet, and reflux condenser was charged with a mixture of 921 g hot DI water, 1.2 g sodium persulfate, and 216 g 400 nm latex seed with polymer composition 60MMA/40MAA and solids content of 30.8% which had been prepared according to the procedure of Example 0 in US5,494,971. A first monomer emulsion consisting of 135 g DI water, 1.65 g sodium dodecylbenzene sulfonate (23%), and 786.2 g Sty was prepared. Gradual addition of this first monomer emulsion was begun as well as gradual addition of 2.9 g sodium persulfate in 18 g DI water. A solution of 4.4 g acrylic acid in 85 g DI water was added over 25 minutes while the mixture was maintained at 85 °C. After addition of the acrylic acid solution was complete 17.3 g 100 nm latex seed with solids content of 45% was added to the reactor. The addition of the first monomer emulsion was then continued for an additional 77 minutes with the reaction temperature maintained at 92° C until 123 g of this first monomer emulsion remained which was reserved. A second monomer emulsion consisting of 26.4 g DI water, 25.8 g sodium dodecylbenzene sulfonate (23%), 281.5 g Sty, and 14.8 g MAA was then added over 38 minutes with the reaction temperature maintained at 94 °C. A polymerization inhibitor, the reserved first monomer emulsion, and 200 g DI water were next added to the reactor which was maintained at 85 °C. A solution of 40 g aqueous ammonia (28%), 29.9 g sodium dodecylbenzene sulfonate, and 1.6 g of another surfactant in 57.5 g DI water was added. After 20 minutes a solution of 0.009 g ferrous sulfate heptahydrate and 0.009 g Versene in 5.9 g DI water was added followed by a solution of 1.4 g tert-butylhydroperoxide (70%) in 24 g DI water and a solution 1.7 g isoascorbic acid in 24 g DI water. After 15 minutes a solution of 1.4 g tert-butylhydroperoxide (70%) in 24 g DI water and a solution 1.7 g isoascorbic acid in 24 g DI water were added to the reactor. The reaction mixture was cooled, a biocide was added, and the reaction product filtered to remove any coagulum formed. The final latex had a solids content of 35.5%, a pH of 9.2, and a Brookfield viscosity of 36 cps.

EXAMPLES 2-7. Preparation of Aqueous Polymeric Dispersions

Examples 2-7 were prepared according to the process of Example 1. Synthesis parameters for Examples 1-7 are presented in Table 3.1 and Characterization parameters for Examples 1-7 are presented in Table 3.2.

Table 3.1.

| Synthesis parameters for Examples 1-7. | | | | | | |
|---|---|---|---|---|---|---|
| Ex. | First Emul. Pol. Core Seed Size (nm) | Parts Core Seed | Second Emul. Pol. Seed Size (nm) | Parts 2nd Seed / Wt.% MAA | 2nd Seed Add'n Pt (%monomer) | Monomer Composition |
| 1 | 400 | 6.1 | 120 | 0.72/ 1.3 | 9.0 | 9(95.4Sty/ 4.6AA)//54.1 (100Sty)// 27.3 (95Sty/5MAA)// 9.6(100Sty) |

Table 3.1.   (continued)

| Ex. | First Emul. Pol. Core Seed Size (nm) | Parts Core Seed | Second Emul. Pol. Seed Size (nm) | Parts 2nd Seed / Wt.% MAA | 2nd Seed Add'n Pt (%monomer) | Monomer Composition |
|---|---|---|---|---|---|---|
| | | Synthesis parameters for Examples 1-7. | | | | |
| 2 | 400 | 6.1 | 120 | 0.72/ 1.3 | 9.0 | 9(95.4Sty/ 4.6MAA)//54.1 (100Sty)// 27.3 (95Sty/5MAA)// 9.6(100Sty) |
| 3 | 400 | 6.1 | 60 | 0.44/ 2.6 | 9.0 | 9(95.4Sty/ 4.6AA)//54.1 (100Sty)// 27.3 (95Sty/5MAA)// 9.6(100Sty) |
| 4 | 400 | 6.1 | 140 | 0.99/ 2.6 | 9.0 | 9(95.4Sty/ 4.6AA)//54.1 (100Sty)// 27.3 (95Sty/5MAA)// 9.6(100Sty) |
| 5 | 400 | 6.1 | 120 | 1.1/ 1.3 | 9.0 | 9(95.4Sty/ 4.6AA)//54.1 (100Sty)// 27.3 (95Sty/5MAA)// 9.6(100Sty) |
| 6 | 400 | 6.1 | 120 | 1.8/ 1.3 | 9.0 | 9(95.4Sty/ 4.6AA)//54.1 (100Sty)// 27.3 (95Sty/5MAA)// 9.6(100Sty) |
| 7 | 400 | 6.1 | 110 | 0.38/ 40 | 0.0 | 9.4(91.3Sty/ 8.7AA)//53.7 (100Sty)// 27.3 (95Sty/5MAA)// 9.6(100Sty) |

Table 3.2

| | Characterization parameters for Examples 1-7 | | | | | | |
|---|---|---|---|---|---|---|---|
| | CHDF Data | | | Centrifuge Data | | Other Physicals | |
| Ex. | Large Mode Size (nm) | Small Mode Size (nm) | Fraction Small Mode (%) | Supernatant Wt (g) | %TS | pH | Visc (cps) |
| 1 | 660 | 350 | 40 | 19.3 | 35.5 | 9.2 | 36 |
| 2 | 650 | 330 | 38 | 17.8 | 35.5 | 9.3 | 39 |
| 3 | 660 | 230 | 40 | 18.8 | 35.3 | 9.6 | 47 |
| 4 | 640 | 450 | 40 | 19.5 | 35.0 | 9.7 | 77 |
| 5 | 640 | 320 | 45 | 19.2 | 35.1 | 9.7 | 74 |
| 6 | 650 | 300 | 55 | 20.6 | 35.0 | 9.6 | 187 |
| 7 | 650 | 480 | 50 | 17.7 | 27.9 | 9.1 | 42 |

EXAMPLES 8-9. Preparation of Aqueous Polymeric Dispersion

Example 8 was prepared by the following method. A 5-liter round-bottom flask equipped with a paddle stirrer, thermocouple, nitrogen inlet, and reflux condenser was charged with a mixture of 896 g hot DI water, 1.2 g sodium persulfate and 4.5 g 40 nm 1.3 wt.% MAA, seed latex with solids content of 33%. A first monomer emulsion consisting of 135 g DI water, 1.65 g sodium dodecylbenzene sulfonate (23%), and 786.2 g Sty was prepared. Gradual addition of this first monomer emulsion was begun as well as gradual addition of 2.9 g sodium persulfate in 18 g DI water. The temperature was maintained at 85 °C. After 110 g of the first monomer emulsion were added to the reactor the addition of monomer emulsion and sodium persulfate solution were stopped, and 200 g 400 nm latex seed, with polymer composition 60 MMA/ 40 MAA and solids content of 31% which had been prepared by the procedure of Example 0 in US Patent No. 5,494,971, was added to the reactor. Gradual addition of the first monomer emulsion and sodium persulfate solution was begun again, and a solution of 4.4 g acrylic acid in 85 g DI water was added over 25 minutes while the mixture was maintained at 85 °C. After addition of the acrylic acid solution was complete the addition of the first monomer emulsion was then continued for an additional 60 minutes with the reaction temperature maintained at 94° C until 123 g of this first monomer emulsion remained which was reserved. A second monomer emulsion consisting of 26.4 g DI water, 25.8 g sodium dodecylbenzene sulfonate (23%), 281.5 g Sty, and 14.8 g MAA was then added over 40 minutes with the reaction temperature maintained at 94 °C. A polymerization inhibitor, the reserved first monomer emulsion, and 200 g DI water were next added to the reactor which was maintained at 85 °C. A solution of 40 g aqueous ammonia (28%), 29.9 g sodium dodecylbenzene sulfonate, and 1.6 g of another surfactant in 57.5 g DI water was added. After 20 minutes a solution of 0.009 g ferrous sulfate heptahydrate and 0.009 g Versene in 5.9 g DI water was added followed by a solution of 1.4 g tert-butylhydroperoxide (70%) in 24 g DI water and a solution of 1.7 g isoascorbic acid in 24 g DI water. After 15 minutes a solution of 1.4 g tert-butylhydroperoxide (70%) in 24 g DI water and a solution of 1.7 g isoascorbic acid in 24 g DI water were added to the reactor. The reaction mixture was cooled, a biocide was added, and the reaction product filtered to remove any coagulum formed.

Example 9 was prepared by the same method with the exception that the 40 nm 1.3 wt% MAA seed latex used in Example 8 was replaced with a 67 nm 2.6 wt% MAA seed latex.

Table 8.1

| Characterization of Examples 8-9 | | | | | | |
|---|---|---|---|---|---|---|
| Ex. | Large Mode Size (nm) | Small Mode Size (nm) | Fraction Small Mode (%) | Supernatant Wt (g) | %TS | pH | Visc (cps) |
| 8 | 820 | 370 | 67 | 19.92 | 34.8 | 9.2 | 1430 |
| 9 | 790 | 420 | 53 | 18.5 | 34.8 | 9.2 | 1980 |

EXAMPLE 10. Preparation of aqueous polymeric dispersion

Example 10 in which a core polymer is prepared by hydrolysis of a latent core polymer may be prepared as follows: A 5-liter round-bottomed flask is equipped with paddle stirrer, thermometer, nitrogen inlet and reflux condenser. To 2115 g of DI water heated to 84 °C in the flask under a nitrogen atmosphere there is added 4.2 g sodium persulfate dissolved in 25 g water followed by 26.9 g acrylic seed polymer dispersion (45% solids, average particle diameter 0.1 micron). A monomer emulsion consisting of 235 g DI water, 0.8 g sodium dodecylbenzene sulfonate, 280 g methyl acrylate, 126 g BA, 280 g MMA, 14 g MAA and 3.5 g divinyl benzene is added to the kettle over a 3-hour period at 85 °C. After the completion of the monomer feed, the dispersion is held at 85 °C for 30 minutes, cooled to 25 °C and is filtered to remove coagulum. The filtered dispersion should have pH below 3, solids content of approximately 22.5%, and an average particle diameter of approximately 0.37 micron.

A 5-liter round-bottom flask equipped with a paddle stirrer, thermocouple, nitrogen inlet, and reflux condenser is charged with a mixture of 921 g hot DI water, 1.2 g sodium persulfate, and 296 g of the latent core latex prepared above. A monomer emulsion consisting of 300 g DI water, 5 g sodium dodecylbenzene sulfonate (23%), 500.0 g Sty, 26.6 g MAA, and 5.3 g acrylamide is prepared. Gradual addition of this monomer emulsion is begun as well as gradual addition of 2.9 g sodium persulfate in 18 g DI water while the mixture is maintained at 85 °C. After 9 % of the total monomer is added 8.6 g of acrylic seed polymer dispersion (45% solids, average particle diameter 0.1 micron) is added to the reactor. The addition of the monomer emulsion is then continued with the reaction temperature maintained at 85 °C for a total addition time of 4 hours. The reaction mixture is held at 85 °C for an additional 2 hours. The mixture is heated to 90 °C and 9 g sodium hydroxide in 36 g water is added. The mixture is held at 90 °C for 20 hours. The resulting dispersion is a mixture of smaller solid particles and larger particles, the larger particles having multiple voids in their interiors.

EXAMPLES 11-14. Preparation of aqueous polymer dispersions with various tiecoat compositions.

EXAMPLE 11. (Tiecoat composition = 95.5Sty/4.5AA)

A 5-liter round-bottom flask equipped with a paddle stirrer, thermocouple, nitrogen inlet, and reflux condenser is charged with a mixture of 921 g hot DI water, 1.2 g sodium persulfate, and 216 g 400 nm latex seed with polymer composition 60MMA/40MAA and solids content of 30.8% which is prepared by the process of Example 0 in US 5,494,971. Gradual addition of 2.9 g sodium persulfate in 18 g DI water is begun. A first monomer emulsion consisting of 20 g DI water, 0.4 g sodium dodecylbenzene sulfonate (23%), 4.4 g acrylic acid, and 93.6 g Sty is gradually added to the reaction flask over 25 minutes while the mixture is maintained at 85 °C. After addition of the first monomer emulsion is complete, 17.3 g of a 100 nm low acid content latex seed with solids content of 45% is added to the reactor. A second monomer emulsion consisting of 120 g DI water, 1.5 g sodium dodecylbenzene sulfonate (23%), and 688.7 g Sty is added over 77 minutes with the reaction temperature maintained at 92° C until 123 g of this second monomer emulsion remains which is reserved. A third monomer emulsion consisting of 26.4 g DI water, 25.8 g sodium dodecylbenzene sulfonate (23%), 281.5 g Sty, and 14.8 g MAA is then added over 38 minutes with the reaction temperature maintained at 94 °C. A polymerization inhibitor, the reserved second monomer emulsion, and 200 g DI water are next added to the reactor which is maintained at 85 °C. A mixture of 53 g aqueous sodium hydroxide (50%), 29.9 g sodium dodecylbenzene sulfonate, and 1.6 g of another surfactant in 57.5 g DI water is added. After 20 minutes a solution of 0.06 g ferrous sulfate heptahydrate and 0.06 g Versene in 5.9 g DI water is added followed by a solution of 1.4 g tert-butylhydroperoxide (70%) in 24 g DI water and a solution of 1.7 g isoascorbic acid in 24 g DI water. After 15 minutes a solution of 1.4 g tert-butylhydroperoxide (70%) in 24 g DI water and a solution of 1.7 g isoascorbic acid in 24 g DI water is added to the reactor. The reaction mixture is cooled, a biocide is added, and the reaction product filtered to remove any coagulum formed. The final latex has a solids content of 35.5%.

EXAMPLE 12 . (Tiecoat 80.5Sty/15MMA/4.5AA)

A 5-liter round-bottom flask equipped with a paddle stirrer, thermocouple, nitrogen inlet, and reflux condenser is charged with a mixture of 921 g hot DI water, 1.2 g sodium persulfate, and 216 g 400 nm latex seed with polymer composition 60MMA/40MAA and solids content of 30.8% which is prepared by the process of Example 0 in US 5,494,971. Gradual addition of 2.9 g sodium persulfate in 18 g DI water is begun. A first monomer emulsion consisting of 20 g DI water, 0.4 g sodium dodecylbenzene sulfonate (23%), 14.7 g MMA, 4.4 g acrylic acid, and 78.9 g Sty is gradually added to the reaction flask over 25 minutes while the mixture is maintained at 85 °C. After addition of the first monomer emulsion is complete, 17.3 g 100 nm low acid content latex seed with solids content of 45% is added to the reactor. A second monomer emulsion consisting of 120 g DI water, 1.5 g sodium dodecylbenzene sulfonate (23%), and 688.7 g Sty is added over 77 minutes with the reaction temperature maintained at 92° C until 123 g of this second monomer emulsion remains which is reserved. A third monomer emulsion consisting of 26.4 g DI water, 25.8 g sodium dodecylbenzene sulfonate (23%), 281.5 g Sty, and 14.8 g MAA is then added over 38 minutes with the reaction temperature maintained at 94 °C. A polymerization inhibitor, the reserved second monomer emulsion, and 200 g deionized water are next added to the reactor which is maintained at 85 °C. A mixture of 53 g aqueous sodium hydroxide (50%), 29.9 g sodium dodecylbenzene sulfonate, and 1.6 g of another surfactant in 57.5 g DI water is added. After 20 minutes a solution of 0.06 g ferrous sulfate heptahydrate and 0.06 g Versene in 5.9 g DI water is added followed by a solution of 1.4 g tert-butylhydroperoxide (70%) in 24 g DI water and a solution of 1.7 g isoascorbic acid in 24 g DI water. After 15 minutes a solution of 1.4 g tert-butylhydroperoxide (70%) in 24 g DI water and a solution of 1.7 g isoascorbic acid in 24 g DI water is added to the reactor. The reaction mixture is cooled, a biocide is added, and the reaction product filtered to remove any coagulum formed. The final latex has a solids content of 35.5%. Relative to the latex of Example 11, the pH of the latex of Example 12 is lower indicating better sodium hydroxide penetration and the weight of supernatant which would be collected by the centrifugation test method is less indicating greater swelling of the large mode.

EXAMPLE 13. (Tiecoat 90Sty/10MMA)

A 5-liter round-bottom flask equipped with a paddle stirrer, thermocouple, nitrogen inlet, and reflux condenser is charged with a mixture of 921 g hot DI water, 1.2 g sodium persulfate, and 216 g 400 nm latex seed with polymer composition 60MMA/40MAA and solids content of 30.8% which is prepared by the process of Example 0 in US 5,494,971. Gradual addition of 2.9 g sodium persulfate in 18 g DI water is begun. A first monomer emulsion consisting of 20 g DI water, 0.4 g sodium dodecylbenzene sulfonate (23%), 9.8 g MMA, and 88.2 g Sty is gradually added to the reaction flask over 25 minutes while the mixture is maintained at 85 °C. After addition of the first monomer emulsion is complete, 17.3 g 100 nm low acid content latex seed with solids content of 45% is added to the reactor. A second monomer emulsion consisting of 120 g DI water, 1.5 g sodium dodecylbenzene sulfonate (23%), and 688.7 g Sty is added over 77 minutes with the reaction temperature maintained at 92° C until 123 g of this second monomer emulsion remains which is reserved. A third monomer emulsion consisting of 26.4 g DI water, 25.8 g sodium dodecylbenzene sulfonate (23%), 281.5 g Sty, and 14.8 g MAA is then added over 38 minutes with the reaction temperature maintained at 94 °C. A polymerization inhibitor, the reserved second monomer emulsion, and 200 g DI water are next added to the reactor which is maintained at 85 °C. A mixture of 47 g aqueous sodium hydroxide (50%), 29.9 g sodium dodecylbenzene sulfonate, and 1.6 g of another surfactant in 57.5 g DI water is added. After 20 minutes a solution of 0.06 g ferrous sulfate heptahydrate and 0.06 g Versene in 5.9 g DI water is added followed by a solution of 1.4 g tert-butylhydroperoxide (70%) in 24 g DI water and a solution of 1.7 g isoascorbic acid in 24 g DI water. After 15 minutes a solution of 1.4 g tert-butylhydroperoxide (70%) in 24 g DI water and a solution of 1.7 g isoascorbic acid in 24 g DI water is added to the reactor. The reaction mixture is cooled, a biocide is added, and the reaction product filtered to remove any coagulum formed. The final latex has a solids content of 35.5%.

EXAMPLE 14. (Tiecoat 65Sty/35MMA)

A 5-liter round-bottom flask equipped with a paddle stirrer, thermocouple, nitrogen inlet, and reflux condenser is charged with a mixture of 921 g hot DI water, 1.2 g sodium persulfate, and 216 g 400 nm latex seed with polymer composition 60MMA/40MAA and solids content of 30.8% which is prepared by the process of Example 0 in US 5,494,971. Gradual addition of 2.9 g sodium persulfate in 18 g DI water is begun. A first monomer emulsion consisting of 20 g DI water, 0.4 g sodium dodecylbenzene sulfonate (23%), 34.3 g MMA, and 63.7 g Sty is gradually added to the reaction flask over 25 minutes while the mixture is maintained at 85 °C. After addition of the first monomer emulsion is complete, 17.3 g 100 nm low acid content latex seed with solids content of 45% is added to the reactor. A second monomer emulsion consisting of 120 g DI water, 1.5 g sodium dodecylbenzene sulfonate (23%), and 688.7 g Sty is added over 77 minutes with the reaction temperature maintained at 92° C until 123 g of this second monomer emulsion remains which is reserved. A third monomer emulsion consisting of 26.4 g DI water, 25.8 g sodium dodecylbenzene sulfonate (23%), 281.5 g Sty, and 14.8 g MAA is then added over 38 minutes with the reaction temperature maintained at 94 °C. A polymerization inhibitor, the reserved second monomer emulsion, and 200 g DI water are next added to the reactor which is maintained at 85 °C. A mixture of 47 g aqueous sodium hydroxide (50%), 29.9 g sodium dodecylbenzene sulfonate, and 1.6 g of another surfactant in 57.5 g DI water is added. After 20 minutes a solution of 0.06 g ferrous sulfate heptahydrate and 0.06 g Versene in 5.9 g DI water is added followed by a solution of 1.4 g tert-butylhydroperoxide (70%) in 24 grams DI water and a solution 1.7 grams isoascorbic acid in 24 g DI water. After 15 minutes a solution of 1.4 grams of tert-butylhydroperoxide (70%) in 24 g DI water and a solution of 1.7 g isoascorbic acid in 24 g DI water is added to the reactor. The reaction mixture is cooled, a biocide is added, and the reaction product filtered to remove any coagulum formed. The final latex has a solids content of 35.5%. Relative to the latex of Example 13, the pH of the final latex is lower indicating better sodium hydroxide penetration and the weight of supernatant collected by the centrifugation test method is less indicating greater swelling of the large mode.

EXAMPLE 15. Preparation and Evaluation of Paper Coated with Waterborne Coating Composition.

The following two paper coatings were made and neutralized with ammonia to pH=8.5. Containing the same dry weight, the coatings were made at the maximum possible solids given the solids of the individual ingredients. The Brookfield viscosities (#3,60) of coating compositions Comparative A and Example 15 were 1080 cps and 1560 cps, respectively.

| Comparative A (solids=64.8%) | Example 15 (solids=66.9%) |
|---|---|
| 75.2 parts Hydrocarb HG<br>18.8 parts Hydragloss 90<br>6 parts Rhoplex HP-1055<br>12 parts Dow 620<br>0.05 parts Rhoplex ASE-75 | 75.2 parts Hydrocarb HG<br>18.8 parts Hydragloss 90<br>6 parts Example 3<br>12 parts Dow 620<br>0.05 parts Rhoplex ASE-75 |

(continued)

| Comparative A (solids=64.8%) | Example 15 (solids=66.9%) |
|---|---|
| Hydrocarb HG is an ultrafine ground calcium carbonate from Omya, Inc. Slurry solids=75.3%. Hydragloss 90 is a high glossing #1 clay from J.M. Huber Corporation, Macon, Georgia. Slurry solids=72%. Dow 620 is an SBR binder from Dow Chemical Company, Midland, Michigan. Solids=49.4%. Rhoplex HP-1055 is a unimodal hollow sphere pigment from Rohm and Haas Company. Solids=26.5%. Rhoplex is a trademark of Rohm and Haas Company Rhoplex ASE-75 is a rheology modifier from Rohm and Haas Company. Solids=40%. Rhoplex is a trademark of Rohm and Haas Company. | |

The paper coating compositions were applied by draw-down with a #3 wire wound rod onto a base coated wood free paper. Coatings were dried 1 minute in an 80°C oven and then conditioned at 50% relative humidity and 72°F. Topcoat weight was 7 pounds per 3300 square feet for both coatings. Samples were calendered 1 nip on a lab gloss calender. Calendering conditions were 130°F, 1030 pounds per linear inch pressure with a speed of 600 feet per minute. Gloss at 75° was measured by TAPPI Test Method T-480.

Table 15.1

| Evaluation of Coated paper | | |
|---|---|---|
| Coating Comp. | Pre-Calender Gloss | Post-Calender Gloss |
| Comp. A | 49.0(0.7) | 78.1(0.5) |
| Ex.15 | 53.4(1.0) | 80.2(0.3) |

Coating composition Example 15 of this invention yields a significantly higher sheet gloss, both pre- and post-calendering, compared to Comparative Example A.

EXAMPLES 16-17. Preparation and Evaluation of Paper Coated with Waterborne Coating Composition.

Example 16 was prepared in the following paper coating composition (Table 16.1) at the maximum practical solids (66% calculated) and Example 17 at lower solids (63% calculated) each thickened to approximately the same viscosity. Comparative Example B was prepared in the following paper coating composition (Table 16.2) at the maximum practical solids (65% calculated) and Comparative Example C at lower solids (62% calculated) each thickened to approximately the same viscosity as measured on a Brookfield LVF Viscometer using spindle No.4 at 60 rpm.

Table 16.1

| Formulation for Examples 16-17 | |
|---|---|
| 90 parts by wt. | Hydrocarb HG (75.3wt.% solids) |
| 10 parts by wt. | Hydrafine 90 (72 wt. % solids) |
| 12 parts by wt. | Dow 620 |
| 6 parts by wt. | Example 3 |
| Finnfix 5G to viscosity | |

Table 16.2

| Formulation for Comparative Examples B-C | |
|---|---|
| 30 parts by wt. | Hydrocarb HG (75.3wt.% solids) |
| 70 parts by wt. | Hydrafine 90 (72 wt. % solids) |
| 12 parts by wt. | Dow 620 |
| 6 parts by wt. | Example 3 |
| Finnfix 5G to viscosity | |
| Note: Finnfix 5 is a carboxymethyl cellulose available from Metsä-Serla Chemicals Oy, Finland. | |

The paper coating compositions were applied by draw-down with a #3 wire wound rod onto a base coated wood free paper. Coatings were dried 1 minute in an 80°C oven and then conditioned at 50% relative humidity and 72°F. Topcoat weight was 7 pounds per 3300 square feet for both coatings. Samples were calendered 1 nip on a lab gloss calender. Calendering conditions were 130°F, 30 pounds per linear inch pressure with a speed of 600 feet per minute. Gloss at 75° was measured by TAPPI Test Method T-480.

Table 16.3

| Evaluation of coated paper | | | | | |
|---|---|---|---|---|---|
| Example | % solids (calc.) | Viscosity (mPs) | Sheet Gloss pre-calender | Sheet Gloss post-calender | Brightness |
| 16 | 66.0 | 3050 | 47.0 | 78.2 | 89.9 |
| 17 | 63.0 | 2800 | 40.0 | 75.3 | 89.9 |
| Comp. B | 65.0 | 2340 | 45.8 | 81.6 | 86.9 |
| Comp.C | 62.0 | 2200 | 39.7 | 80.5 | 86.9 |

The maximum practical solids paper coating composition of Example 16 made possible by the aqueous polymeric dispersion of Example 3 compared to the paper coating composition of Example 17 provides a significantly higher delta gloss after calendering (78.2 - 75.3 = 2.9 units) in a waterborne pigmented paper coating composition containing 50% to 100%, by weight of the pigment, calcium carbonate than does the maximum practical solids paper coating composition of Comparative Example B made possible by the aqueous polymeric dispersion of Example 3 compared to Comparative Example C (81.6 - 80.5 = 1.1 units) in a waterborne pigmented paper coating composition not containing 50% to 100%, by weight of the pigment, calcium carbonate. The superior brightness of the paper coating composition of this invention is evident.

**Claims**

1.    A waterborne pigmented paper or paperboard coating composition comprising pigment comprising 50% to 100%, by weight of said pigment, calcium carbonate and from 1% to 25%, as dry weight by weight of said pigment, of an aqueous polymeric dispersion comprising

       (a) 95-25% by weight, based on the weight of the solids of said aqueous polymeric dispersion, of a first emulsion polymer having an average particle diameter of 150 to 3000 nanometers and
       (b) 5-75% by weight, based on the weight of the solids of said aqueous polymeric dispersion, of a second emulsion polymer having an average particle diameter of 40 to 600 nanometers

       wherein the ratio of said average particle diameter of said first emulsion polymer to said average particle diameter of said second emulsion polymer is from 1.2 to 60,
       wherein at least said first emulsion polymer particles, when dry, contain at least one void, and wherein said first emulsion polymer is prepared in the presence of said second emulsion polymer or said second emulsion polymer is prepared in the presence of said first emulsion polymer.

2.    A method for improving the sheet gloss of coated paper or paperboard comprising

       forming a waterborne pigmented paper or paperboard coating composition comprising pigment comprising 50% to 100%, by weight of said pigment, calcium carbonate and from 1% to 25%, as dry weight by weight of said pigment, of an aqueous polymeric dispersion comprising

       (a) 95-25% by weight, based on the weight of the solids of said aqueous polymeric dispersion, of a first emulsion polymer having an average particle diameter of 150 to 3000 nanometers and
       (b) 5-75% by weight, based on the weight of the solids of said aqueous polymeric dispersion, of a second emulsion polymer having an average particle diameter of 40 to 600 nanometers

       wherein the ratio of said average particle diameter of said first emulsion polymer to said average particle diameter of said second emulsion polymer is from 1.2 to 60,

wherein at least said first emulsion polymer particles, when dry, contain at least one void, and wherein said first emulsion polymer is prepared in the presence of said second emulsion polymer or said second emulsion polymer is prepared in the presence of said first emulsion polymer;
applying said coating to paper or paperboard;
drying said applied coating at a temperature of 50 C to 100 C; and
optionally, calendering said coated paper or paperboard.

European Patent
Office

**EUROPEAN SEARCH REPORT**

Application Number

EP 01 30 2462

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | US 4 567 099 A (VAN GILDER RON L ET AL) 28 January 1986 (1986-01-28) * column 3, line 15 - line 62 * | 1,2 | D21H19/38 D21H19/42 D21H19/70 |
| Y | EP 0 842 992 A (ROHM & HAAS) 20 May 1998 (1998-05-20) * page 4, line 53 - line 55 * * page 5, line 42 - line 44 * * claim 1 * | 1,2 | |
| Y,D | DATABASE WPI Section Ch, Week 199332 Derwent Publications Ltd., London, GB; Class A82, AN 1993-252742 XP002168918 & JP 05 170802 A (MITSUI TOATSU CHEM INC), 9 July 1993 (1993-07-09) * abstract * | 1,2 | |
| Y | US 4 970 241 A (KOWALSKI ALEXANDER ET AL) 13 November 1990 (1990-11-13) * column 8, line 5 - line 22 * * claim 1 * | 1,2 | TECHNICAL FIELDS SEARCHED (Int.Cl.7) D21H |
| A | EP 0 173 789 A (DAINIPPON INK & CHEMICALS) 12 March 1986 (1986-03-12) * claims * | 1,2 | |
| A | DATABASE WPI Section Ch, Week 199724 Derwent Publications Ltd., London, GB; Class A18, AN 1997-268073 XP002168919 & JP 09 095896 A (OJI PAPER CO), 8 April 1997 (1997-04-08) * abstract * | 1,2 | |

-/--

The present search report has been drawn up for all claims

| Place of search | Date of completion of the search | Examiner |
|---|---|---|
| MUNICH | 6 June 2001 | Naeslund, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

Application Number

EP 01 30 2462

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 474 860 A (VAN GILDER RONALD L ET AL) 2 October 1984 (1984-10-02) * claims 1,2,8,14 * * column 1, line 6 - line 8 * * column 2, line 58 - line 65 * | 1,2 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 6 June 2001 | Naeslund, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 30 2462

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2001

| Patent document cited in search report | | Publication date | Patent family member(s) | | Publication date |
|---|---|---|---|---|---|
| US 4567099 | A | 28-01-1986 | AU | 573887 B | 23-06-1988 |
| | | | AU | 4658085 A | 26-06-1986 |
| | | | CA | 1244569 A | 08-11-1988 |
| | | | JP | 61152897 A | 11-07-1986 |
| EP 0842992 | A | 20-05-1998 | AU | 4432997 A | 21-05-1998 |
| | | | BR | 9705715 A | 29-06-1999 |
| | | | CA | 2219965 A | 15-05-1998 |
| | | | CN | 1182763 A | 27-05-1998 |
| | | | JP | 10147742 A | 02-06-1998 |
| JP 5170802 | A | 09-07-1993 | NONE | | |
| US 4970241 | A | 13-11-1990 | US | 4880842 A | 14-11-1989 |
| | | | AT | 91491 T | 15-07-1993 |
| | | | AU | 616756 B | 07-11-1991 |
| | | | AU | 3486889 A | 23-11-1989 |
| | | | BR | 8902330 A | 09-01-1990 |
| | | | CA | 1303438 A | 16-06-1992 |
| | | | CN | 1040039 A,B | 28-02-1990 |
| | | | DE | 68907521 D | 19-08-1993 |
| | | | DE | 68907521 T | 02-12-1993 |
| | | | DK | 244989 A | 21-11-1989 |
| | | | EP | 0342944 A | 23-11-1989 |
| | | | ES | 2058519 T | 01-11-1994 |
| | | | FI | 892446 A,B, | 21-11-1989 |
| | | | HK | 123093 A | 19-11-1993 |
| | | | IE | 64597 B | 23-08-1995 |
| | | | IL | 90355 A | 01-12-1992 |
| | | | JP | 2064103 A | 05-03-1990 |
| | | | JP | 2774145 B | 09-07-1998 |
| | | | KR | 158367 B | 15-01-1999 |
| | | | MX | 164012 B | 09-07-1992 |
| | | | NO | 173391 C | 08-12-1993 |
| | | | NZ | 229145 A | 23-12-1991 |
| | | | PH | 25322 A | 30-04-1991 |
| | | | SG | 103593 G | 21-01-1994 |
| EP 0173789 | A | 12-03-1986 | JP | 61062510 A | 31-03-1986 |
| JP 9095896 | A | 08-04-1997 | NONE | | |
| US 4474860 | A | 02-10-1984 | AU | 556005 B | 16-10-1986 |
| | | | AU | 3012984 A | 04-12-1984 |
| | | | BR | 8406895 A | 16-04-1985 |
| | | | CA | 1207930 A | 15-07-1986 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**          EP 01 30 2462

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2001

| Patent document cited in search report | Publication date | Patent family member(s) | Publication date |
|---|---|---|---|
| US 4474860 A | | CH 666486 A | 29-07-1988 |
| | | DE 3470188 D | 05-05-1988 |
| | | EP 0143845 A | 12-06-1985 |
| | | FI 850127 A,B, | 11-01-1985 |
| | | JP 60501219 T | 01-08-1985 |
| | | NO 850161 A | 15-01-1985 |
| | | WO 8404491 A | 22-11-1984 |